# EUROPÄISCHE PATENTANMELDUNG

(11) **EP 4 841 136 A1**
(43) Veröffentlichungstag der Anmeldung: **18.11.2026**
(21) Anmeldenummer: 25176196.1
(22) Anmeldetag: 13.05.2025
(51) Int. Cl.: F16J 15/3212, F16J 15/3248, F16J 15/3296

(54) **DICHTEINHEIT, ROTORLAGEREINHEIT, WINDENERGIEANLAGE, VERFAHREN ZUM BEREITSTELLEN EINES SCHALTSIGNALS ZUM HEIZEN EINER DICHTEINHEIT UND VERFAHREN SOWIE STEUERUNGSEINHEIT ZUM HEIZEN EINER DICHTEINHEIT**

(71) Anmelder: Wobben Properties GmbH, 26607 Aurich (DE)
(72) Erfinder: Haller, Matthias, 26607 Aurich (DE); Meier, Andreas, 26835 Neukamperfehn (DE)
(74) Vertreter: Eisenführ Speiser

(57) **Zusammenfassung**

Dichteinheit (1), insbesondere Dichteinheit (1) für eine Rotorlagereinheit (2) einer Windenergieanlage (100), umfassend einen Dichtring (10), aufweisend einen Dichtkörper (11) bestehend aus Kunststoff oder Kautschuk und ein elektrisch leitendes Metallelement (12), welches an dem Dichtkörper (11) mindestens abschnittsweise anliegt, eine mit dem Metallelement (12) koppelbare oder gekoppelte Spannungsquelle (20), zum Erzeugen eines elektrischen Stroms in dem Metallelement (12), eine Schalteinheit (30), welche ausgebildet ist, die Spannungsquelle (20) mit dem Metallelement (12) in einem Heizzustand der Dichteinheit (1) zu einem Stromkreis zu schließen, so dass die Spannungsquelle (20) dem Metallelement (12) einen elektrischen Strom erzeugt, und den Stromkreis der Spannungsquelle (20) und des Metallelements (12) in einem von dem Heizzustand verschiedenen Ruhezustand der Dichteinheit (1) zu unterbrechen, so dass die Spannungsquelle (20) dem Metallelement (12) keinen elektrischen Strom erzeugt.

## Beschreibung

Die Erfindung betrifft eine Dichteinheit. Ferner betrifft die Erfindung eine Rotorlagereinheit für eine Windenergieanlage. Weiterhin betrifft die Erfindung eine Windenergieanlage. Ferner betrifft die Erfindung ein Verfahren zum Bereitstellen eines Schaltsignals zum Heizen einer Dichteinheit. Ferner betrifft die Erfindung ein Verfahren sowie eine Steuerungseinheit zum Heizen einer Dichteinheit. Schließlich betrifft die Erfindung eine Verwendung eines elektrisch leitenden Metallelements und einer Dichteinheit.

Windenergieanlagen werden oder sind einzeln oder in Parks weltweit aufgestellt. Die klimatischen Bedingungen der Aufstellorte der Windenergieanlagen können hierbei stark variieren. Entsprechend werden Windenergieanlagen in Bezug auf diese variierenden klimatischen Bedingungen für einen großen Anwendungsbereich ausgelegt. So finden sich Windenergieanlagen in Regionen mit Temperaturen weit über 40°C oder aber auch in Regionen mit Temperaturen weiter unter -20°C. Insbesondere klimatische Extrembedingungen, beispielsweise zu hohe oder zu niedrige Umgebungstemperaturen am Aufstellort von Windenergieanlagen, können einen (temporären) Ausfall von Windenergieanlagen bedingen. Der Ausfall der Windenergieanlagen hängt hierbei häufig vom Versagen eines Bauteils ab.

Temperatursensible Bauteile einer Windenergieanlage sind beispielsweise Dichtungen. Beispielsweise dichten Radialwellendichtringe oder Axialwellendichtringe als Dichtungen eine Rotorlagereinheit ab, welche üblicherweise öl- oder fettgeschmiert ist. Diese Dichtringe bestehen üblicherweise aus Kunststoff (z.B. H-PU, TPU) oder Kautschuk (z.B. HNBR, NBR) oder umfassen diese Materialien. Die für die Dichtringe verwendeten Kunststoffe oder Kautschuke haben den Nachteil, dass sie bei niedrigen Temperaturen Elastizität verlieren. Mit dem Elastizitätsverlust verlieren diese Dichtungen in der Regel auch ihre Dichtwirkung, was zu Leckagen, und beispielsweise bei Dichtungen von Lagereinheiten, zu einem Versagen der Lagereinheiten führen kann. Häufig tritt der Elastizitätsverlust und damit der Verlust der Dichtwirkung bei Temperaturen unterhalb von -20°C ein.

Der Erfindung liegt daher die Aufgabe zugrunde, eine Lösung bereitzustellen, welche die zuvor skizzierten Nachteile überwindet oder zumindest minimiert. Vorzugsweise liegt der Erfindung die Aufgabe zugrunde, eine Lösung bereitzustellen, welche eine Dichtwirkung auch bei niedrigen Temperaturen, ab der das Material der Dichtung die für die Dichtwirkung erforderliche Elastizität verliert, zu gewährleisten. Insbesondere liegt der Erfindung die Aufgabe zugrunde, eine Dichteinheit, eine Rotorlagereinheit für eine Windenergieanlage, ein Verfahren zum Bereitstellen eines Schaltsignals zum Heizen einer Dichteinheit, ein Verfahren sowie eine Steuerungseinheit zum Heizen einer Dichteinheit, sowie eine Verwendung eines elektrisch leitenden Metallelements und einer Dichteinheit bereitzustellen, welche eine Dichtwirkung auch bei niedrigen Temperaturen, ab der das Material der Dichtung die für die Dichtwirkung erforderliche Elastizität verliert, zu gewährleisten.

Gemäß einem ersten Aspekt der Erfindung wird die Aufgabe durch eine Dichteinheit nach Anspruch 1 gelöst.

Die Dichteinheit ist insbesondere eine Dichteinheit für eine Rotorlagereinheit einer Windenergieanlage. Die Dichteinheit umfasst einen Dichtring, eine Spannungsquelle und eine Schalteinheit.

Die Dichteinheit weist einen Dichtkörper bestehend aus Kunststoff oder Kautschuk und ein elektrisch leitendes Metallelement, welches an dem Dichtkörper mindestens abschnittsweise anliegt, auf. Insbesondere liegt das elektrisch leitende Metallelement in solcher Weise an dem Dichtkörper an, dass der Dichtkörper durch das elektrisch leitende Metallelement umschlossen ist.

Der Dichtkörper kann ein- oder mehrteilig ausgebildet sein. Der Dichtkörper weist üblicherweise einen Schenkel auf, der einen flächigen Dichtungsbereich ausbildet, und eine Dichtlippe oder Dichtkante, die einen linienförmigen Dichtungsbereich ausbildet. Es kann bevorzugt sein, dass der Dichtkörper auch zwei oder mehr Dichtkanten ausbildet. Die Dichtungslippe oder Dichtkante dichtet üblicherweise einen Innenraum gegenüber einer Umgebung ab. Es kann bevorzugt sein, dass der Dichtkörper ferner eine Staublippe ausbildet, welche den Zutritt von Staub zur Dichtlippe oder Dichtkante minimiert.

Bei einem Radialwellendichtring sind der flächenförmige Dichtungsbereich und der linienförmige Dichtungsbereich in Radialrichtung gegenüberliegend ausgebildet. Bei einem Axialwellendichtring sind der flächenförmige Dichtungsbereich und der linienförmige Dichtungsbereich in Axialrichtung gegenüberliegend ausgebildet.

Häufig bildet der Dichtkörper einen Verbindungsabschnitt aus, über den der flächenförmige Dichtungsbereich und die Dichtkante und ggf. die Staublippe verbunden sind.

Üblicherweise wird der Dichtkörper durch einen Metalleinsatz verstärkt oder versteift. Häufig erstreckt sich der Metalleinsatz abschnittsweise durch den Dichtkörper, der den flächenförmigen Dichtungsbereich ausbildet, sowie ggf. den Verbindungsabschnitt des Dichtkörpers. Vorzugsweise wird der Metalleinsatz vom Dichtkörper zumindest teilweise, vorzugsweise vollständig, umschlossen. Insbesondere ist der Metalleinsatz vom Dichtkörper zumindest teilweise, vorzugsweise vollständig, umgossen. Für die Zugfeder bildet der Dichtkörper in der Regel eine Federnut aus, in der die Zugfeder angeordnet sein kann.

Ferner ist üblicherweise vorgesehen, dass an dem Dichtkörper im Bereich der Dichtkante eine Zugfeder oder der Metalleinsatz (z.B. als Mäanderfeder, V-Feder oder Helicoil-Feder) vorgesehen ist, welche den Dichtkörper in diesem Bereich radial und/oder axialvorspannt, so dass die Dichtkante an einem sich drehenden Bauteil oder an einem stehenden Bauteil definiert anliegt, um die Dichtungswirkung zu erzielen.

Die Zugfeder und/oder der Metalleinsatz sind vorzugsweise ringförmig oder zumindest teilringförmig ausgebildet. Insbesondere kann es bevorzugt sein, dass der Metalleinsatz im Querschnitt als Winkel ausgebildet ist. Vorzugsweise bildet der Metalleinsatz im Querschnitt einen 90°-Winkel oder einen spitzen Winkel aus.

Es kann bevorzugt sein, dass der Metalleinsatz und/oder die Zugfeder das elektrisch leitende Metallelement ausbilden oder sind.

Der Kunststoff ist beispielsweise ein Hydrolysebeständiges Polyurethan (HPU) oder ein Thermoplastisches Polyurethan (TPU). Der Kautschuk ist beispielsweise ein Nitrilkautschuk (NBR) oder ein Hydrierter Nitrilkautschuk (HNBR).

Die Spannungsquelle kann beispielsweise eine Batterie oder ein Akkumulator sein. Ferner kann ein Generator einer Windenergieanlage die Spannungsquelle sein. Hierbei kann es bevorzugt sein, dass ein Transformator die Spannung des Generators auf eine davon abweichende, für die Bestromung des Metallelements geeignete Spannung wandelt.

Die Spannungsquelle ist mit dem Metallelement koppelbar oder gekoppelt zum Erzeugen eines elektrischen Stroms in dem Metallelement. Es kann bevorzugt sein, dass einer der beiden Pole der Spannungsquelle permanent mit dem Metallelement gekoppelt ist und der andere der beiden Pole mit dem Metallelement koppelbar ist, je nachdem, ob die Dichteinheit sich in einem Heizzustand befindet (der andere der beiden Pole der Spannungsquelle ist mit dem Metallelement gekoppelt) oder in einem Ruhezustand befindet (der andere der beiden Pole der Spannungsquelle ist von dem Metallelement entkoppelt).

Ergänzend oder alternativ kann es bevorzugt sein, das Metallelement mittels einer elektronischen Steuerung mit elektrischen Strom versorgt wird. Beispielsweise kann Metallelement mittels einer Pulsweitenmodulation elektrischer Strom variabel zugeführt werden. Insbesondere kann es bevorzugt sein, dass die Schalteinheit als elektronische Steuerung ausgebildet ist, welche, beispielsweise, Metallelement mittels einer Pulsweitenmodulation elektrischen Strom variabel zuführt, d.h. den Stromkreis schließt oder unterbricht.

Die Schalteinheit ist ausgebildet, die Spannungsquelle mit dem Metallelement in dem Heizzustand der Dichteinheit zu einem Stromkreis zu schließen, so dass die Spannungsquelle dem Metallelement einen elektrischen Strom erzeugt. Ergänzend ist die Schalteinheit ausgebildet, den Stromkreis der Spannungsquelle und des Metallelements in einem von dem Heizzustand verschiedenen Ruhezustand der Dichteinheit zu unterbrechen, so dass die Spannungsquelle dem Metallelement keinen elektrischen Strom erzeugt.

Die Schalteinheit ist ausgebildet, die Spannungsquelle mit dem Metallelement in dem Heizzustand der Dichteinheit zu einem Stromkreis zu schließen, so dass die Spannungsquelle dem Metallelement einen elektrischen Strom erzeugt. Ergänzend ist die Schalteinheit ausgebildet, den Stromkreis der Spannungsquelle und des Metallelements in einem von dem Heizzustand verschiedenen Ruhezustand der Dichteinheit zu unterbrechen, so dass die Spannungsquelle dem Metallelement keinen elektrischen Strom erzeugt.

Es kann bevorzugt sein, dass die Dichteinheit manuell zwischen einem Heizzustand und einem Ruhezustand hin- und herschaltbar ist oder hin- und hergeschaltet wird. Dies kann beispielsweise durch einen Mitarbeiter vor Ort an der Windenergieanlage erfolgen oder aber durch einen Mitarbeiter, der remote auf die Dichteinheit zugreifen kann und den gewünschten Zustand der Dichteinheit, also den Heizzustand oder den Ruhezustand, auswählen kann. Als Indikator kann ihm beispielsweise die Umgebungstemperatur der Dichteinheit oder Temperatur unmittelbar an der Dichteinheit dienen. Es ist denkbar, dass hierzu eine Temperaturmesseinheit angeordnet sein kann. Ergänzend oder alternativ können als grobe Näherung auch Wetterdaten bzw. Temperaturdaten von Drittanbietern zu dem Ort, an dem sich die Dichteinheit bzw. die Dichteinheit einer Windenergieanlage befindet, dienen, um zu entscheiden, ob die Dichteinheit in den Heiz- oder Ruhezustand zu schalten ist.

Vorzugsweise befindet sich die Dichteinheit so lange in dem Heizzustand bis eine Minimalgrenzbetriebstemperatur der Dichteinheit überschritten wird und befindet sich so lange in dem Ruhezustand bis die Minimalgrenzbetriebstemperatur der Dichteinheit unterschritten wird. Die Minimalgrenzbetriebstemperatur hängt hierbei von der Werkstoffwahl des Dichtkörpers ab. Nach der Erkenntnis der Erfinder liegt die Minimalgrenzbetriebstemperatur der am Markt bekannten Dichtungen üblicherweise im Bereich von -20°C. Entsprechend würde die Dichteinheit von dem Ruhezustand in den Heizzustand schalten, wenn die Minimalgrenzbetriebstemperatur auf -20°C festgelegt worden ist und unterschritten wird, und von dem Heizzustand in den Ruhezustand schalten, wenn die Minimalgrenzbetriebstemperatur von beispielsweise -20°C überschritten wird.

Die erfindungsgemäße Dichteinheit kann grundsätzlich überall dort eingesetzt werden, wo Dichtungen mit einem Dichtkörper aus Kunststoff und/oder Kautschuk aufgrund niedriger Temperaturen an Elastizität und insoweit an Dichtwirkung verlieren. Ferner setzt die erfindungsgemäße Dichteinheit voraus, dass die Dichteinheit selbst ein entsprechendes elektrisch leitendes Metallelement aufweist oder aber der Bauraum, in dem die Dichteinheit anzuordnen ist, eine Anordnung eines elektrisch leitenden Metallelements zulässt.

Die erfindungsgemäße Dichteinheit hat den Vorteil, dass der Dichtkörper in solcher Weise temperiert werden kann, dass er auch bei kalten Temperaturen nicht die Elastizität und somit die Dichtungswirkung verliert. Die erfindungsgemäße Dichteinheit macht sich hierbei zunutze, dass das stromdurchflossene Metallelement in Abhängigkeit des Stroms / bzw. der Spannung U, dem ohmschen Widerstand R und der Zeit t, in der die elektrische Spannung an dem Metallelement anliegt bzw. der elektrischer Strom durch das Metallelement fließt, Wärme Q, auch Elektrowärme genannt, erzeugt: $Q = \frac{{U}^{2}}{R} ∗ t = {I}^{2} ∗ R ∗ t$

Dies ermöglicht, die Dichteinheit auf eine gewünschte Temperatur zu temperieren, so dass sie nicht die Dichtwirkung verliert. Nach der Erkenntnis der Erfinder tritt dies in der Regel bei kalten Temperaturen auf, wobei vorbekannte Dichtungen üblicherweise ab einer Temperatur von -20°C ihre für die Dichtwirkung erforderliche Elastizität verlieren. Entsprechend ist die Dichteinheit vorzugsweise derart zu temperieren, dass sie mindestens oberhalb der -20°C liegt.

Bei der Temperierung ist zu beachten, dass sich die Dichteinheit so lange im Heizzustand befindet bis eine gewünschte Zieltemperatur oder ein gewünschter Zieltemperaturbereich des Dichtkörpers erreicht worden ist. Hierbei ist zu beachten, dass die gewünschte Zieltemperatur oder der gewünschte Zieltemperaturbereich unterhalb einer Temperatur liegen muss, so dass die Dichteinheit bzw. die an die Dichteinheit angrenzenden Bauelemente aufgrund der Temperatur nicht unbrauchbar werden. Vorzugsweise ist die Dichteinheit ferner in solcher Weise zu temperieren, dass die Temperatur der Dichteinheit unterhalb der Schmelztemperatur des Dichtkörpers und/oder des elektrisch leitenden Metallelements ist.

Beispielsweise kann zur Regelung oder Steuerung der Temperatur der Effekt genutzt werden, dass sich der Widerstand des Metallelements in Abhängigkeit der Temperatur ändert. Insoweit erlaubt also der Widerstand des Metallelements bzw. die Veränderung des Widerstands Rückschlüsse auf die Temperatur des Metallelements, so dass die Dichtheizung entsprechend angesteuert werden kann.

Ergänzend oder alternativ kann ein oder können mehrere Temperaturfühler vorgesehen werden. Insbesondere kann mindestens ein Temperaturfühler an oder in dem Bereich der Dichteinheit angeordnet sein. Insbesondere kann mindestens ein Temperaturfühler an oder in dem Bereich des Metallelements angeordnet sein. Es kann bevorzugt sein, dass mindestens ein Temperaturfühler mit dem Metallelement in Kontakt steht.

Zu den Vorteilen, Ausführungsvarianten und Ausführungsdetails dieses Aspekts der Erfindung und ihrer Fortbildungen wird auch auf die nachfolgende Beschreibung zu den entsprechenden Merkmalen der jeweiligen anderen Aspekte sowie der Ausführungsvarianten und Ausführungsdetails dieser weiteren Aspekte der Erfindung verwiesen.

Die Dichteinheit weist gemäß einer bevorzugten Fortbildung eine Temperaturmesseinheit auf, welche im Bereich des Dichtrings, vorzugsweise an dem Dichtkörper, angeordnet ist und eine IST-Temperatur erfasst, wobei die Schalteinheit ausgebildet ist, die Dichteinheit von dem Ruhezustand in den Heizzustand zu schalten, wenn die IST-Temperatur unter eine Minimalgrenzbetriebstemperatur der Dichteinheit fällt, und die Dichteinheit von dem Heizzustand in den Ruhezustand zu schalten, wenn die IST-Temperatur die Minimalgrenzbetriebstemperatur überschreitet, und/oder die IST-Temperatur eine Maximalgrenzbetriebstemperatur der Dichteinheit überschreitet, und/oder die IST-Temperatur in einem Bereich der Zielbetriebstemperatur der Dichteinheit liegt.

Vorzugsweise ist die Minimalgrenzbetriebstemperatur und/oder die Maximalgrenzbetriebstemperatur eine Temperatur, die in Abhängigkeit des Werkstoffs bzw. Materials des Dichtkörpers festgelegt wird. Es kann beispielsweise durch Messungen festgestellt werden, bis zu welcher Minimal- und Maximaltemperatur der jeweilige Werkstoff des Dichtkörpers die gewünschte Dichtwirkung hat und ab wann diese nachlässt bzw. in einem solchen Maß nachlässt bzw. ab wann Schäden an der Dichteinheit oder an benachbarten Bauteilen auftreten.

Insofern hilft dies insbesondere, die Dichteinheit derart zu temperieren, dass die Temperatur der Dichteinheit so hoch wie nötig und die Temperaturdifferenz zwischen der IST-Temperatur des Dichtkörpers und der Umgebungstemperatur so gering wie möglich ist. Hierdurch wird ermöglicht, dass die Dichtwirkung möglichst energieeffizient aufrechterhalten wird.

Ferner weist die Dichteinheit gemäß einer bevorzugten Ausführungsform eine Steuerungseinheit auf, welche mit der Schalteinheit und/oder der Temperaturmesseinheit signaltechnisch gekoppelt ist, wobei die Steuerungseinheit ausgebildet ist, der Schalteinheit ein entsprechendes Schaltsignal bereitzustellen, welches ein Schalten von dem Ruhezustand in den Heizzustand auslöst, wenn die IST-Temperatur unter eine Minimalgrenzbetriebstemperatur fällt, und/oder ein Schalten von dem Heizzustand in den Ruhezustand auslöst, wenn die IST-Temperatur die Minimalgrenzbetriebstemperatur überschreitet und/oder die IST-Temperatur eine Maximalgrenzbetriebstemperatur der Dichteinheit überschreitet, und/oder die IST-Temperatur in einem Bereich der Zielbetriebstemperatur der Dichteinheit liegt.

Die Steuerungseinheit ermöglicht eine automatisierte Temperierung der Dichteinheit in Abhängigkeit der Minimalgrenzbetriebstemperatur, der Maximalgrenzbetriebstemperatur, der Zielbetriebstemperatur bzw. dem Bereich der Zielbetriebstemperatur. Dies hat den Vorteil, dass insbesondere an entlegenen Standorten oder an besonders kalten Standorten die Dichteinheit temperiert werden kann, ohne dass Personal vor Ort sein muss.

Nach einer ferner bevorzugten Fortbildung der Dichteinheit ist vorgesehen, dass das elektrisch leitende Metallelement ein Vorspannelement zum Vorspannendes Dichtkörpers ist, und/oder eine Zugfeder zum Spannen des Dichtkörpers ist, und/oder ein Draht ist, und/oder ein ringförmiges Winkelelement ist. Insbesondere kann es bevorzugt sein, dass das elektrisch leitende Metallelement eine Druckfeder ist. Ergänzend oder alternativ ist das elektrisch leitende Metall eine V-Feder und/oder eine Mäanderfeder und/oder eine Helicoil-Feder.

Vorzugsweise erstreckt sich das Metallelement in einer Umfangsrichtung ringförmig oder teilringförmig. Vorzugsweise weist das Metallelement orthogonal zur Umfangrichtung einen kreisförmigen Querschnitt auf. Ergänzend oder alternativ weist das Metallelement orthogonal zur Umfangrichtung einen L-förmigen oder T-förmigen Querschnitt auf. Insbesondere kann das Metallelement winklig, beispielsweise spitzwinklig oder rechtwinklig, ausgebildet sein.

Es ist insbesondere vorteilhaft, wenn das Metallelement ein Vorspannelement zum Vorspannen des Dichtkörpers ist, und/oder eine Zugfeder zum Spannen des Dichtkörpers ist. Denn hierdurch können Elemente der Dichteinheit, welche in den vorbekannten Dichteinheiten üblicherweise enthalten sind, zum Bestromen und somit zum Erwärmen der Dichteinheit durch die Spannungsquelle genutzt werden.

Weiterhin ist gemäß einer bevorzugten Fortbildung der Dichteinheit vorgesehen, dass der Dichtkörper das Metallelement mindestens teilweise umschließt und/oder das Metallelement vom Dichtkörper mindestens teilweise umgossen ist.

Nach einer weiteren bevorzugten Ausführungsform der Dichteinheit ist vorgesehen, dass der Dichtring ein Radialwellendichtring oder ein Axialwellendichtring ist. Dies hat den Vorteil, dass die Dichteinheit vorbekannte Dichtungen verwenden kann, die je nach Anwendungsgebiet und gewünschter Dichtwirkung kostengünstig eingesetzt werden können.

Gemäß einem weiteren Aspekt der Erfindung wird die Aufgabe durch eine Rotorlagereinheit für eine Windenergieanlage nach Anspruch 7 gelöst.

Die Rotorlagereinheit umfasst einen innenliegenden Rotorlagerring und einen außenliegenden Rotorlagerring, die mittels einer Lageranordnung drehbar zueinander gelagert werden. Vorzugsweise ist der außenliegende Rotorlagerring mit dem Rotor gekoppelt und insofern der sich im Betrieb der Windenergieanlage drehende Teil der Rotorlagereinheit, und der innenliegende Rotorlagerring der feststehende Teil der Rotorlagereinheit, der mit dem Maschinenträger gekoppelt ist. Alternativ ist es insbesondere bevorzugt, dass der innenliegende Rotorlagerring mit dem Rotor gekoppelt und insofern der sich im Betrieb der Windenergieanlage drehende Teil der Rotorlagereinheit ist, und der außenliegende Rotorlagerring der feststehende Teil der Rotorlagereinheit ist, der Achszapfen, der mit dem Maschinenträger gekoppelt ist.

Gemäß diesem Aspekt ist vorgesehen, dass die Rotorlagereinheit eine oder mehrere zuvor beschriebene Dichteinheit/en gemäß dem ersten Aspekt und ihrer Fortbildungen umfasst.

Nach einer bevorzugten Fortbildung der Rotorlagereinheit ist vorgesehen, dass die eine oder mehreren Dichteinheit/en zwei oder mehrere Axialwellendichtringe und/oder zwei oder mehrere Radialwellendichtringe aufweist bzw. aufweisen, die jeweils mit der Spannungsquelle der jeweiligen Dichteinheit koppelbar sind oder gekoppelt sind.

Gemäß einer bevorzugten Ausführungsform weist die Rotorlagereinheit eine Temperaturmesseinheit auf, welche an oder innerhalb der Rotorlagereinheit angeordnet ist, wobei die Temperaturmesseinheit insbesondere im Bereich des Dichtrings, vorzugsweise an dem Dichtkörper, angeordnet ist. Dies hat den Vorteil, dass die tatsächliche IST-Temperatur des Dichtkörpers möglichst genau erfasst wird. Dies ermöglicht eine effizientere Bestromung des Metallelements bzw. eine effizientere Temperierung der Dichteinheit.

Zu den Vorteilen, Ausführungsvarianten und Ausführungsdetails dieses Aspekts der Erfindung und ihrer Fortbildungen wird auch auf die vorstehende und nachfolgende Beschreibung zu den entsprechenden Merkmalen der jeweiligen anderen Aspekte sowie der Ausführungsvarianten und Ausführungsdetails dieser weiteren Aspekte der Erfindung verwiesen.

Gemäß einem weiteren Aspekt der Erfindung wird die Aufgabe durch eine Windenergieanlage nach Anspruch 10 gelöst. Die Windenergieanlage umfasst eine zuvor beschriebene Dichteinheit gemäß dem ersten Aspekt und ihrer Fortbildungen und/oder eine zuvor beschriebene Rotorlagereinheit nach einem weiteren Aspekt und ihrer Fortbildungen.

Zu den Vorteilen, Ausführungsvarianten und Ausführungsdetails dieses Aspekts der Erfindung und ihrer Fortbildungen wird auch auf die vorstehende und nachfolgende Beschreibung zu den entsprechenden Merkmalen der jeweiligen anderen Aspekte sowie der Ausführungsvarianten und Ausführungsdetails dieser weiteren Aspekte der Erfindung verwiesen.

Gemäß einem weiteren Aspekt der Erfindung wird die Aufgabe durch ein Verfahren zum Bereitstellen eines Schaltsignals zum Heizen einer Dichteinheit nach Anspruch 11 gelöst. Das Verfahren ist insbesondere ein Verfahren zum Bereitstellen eines Schaltsignals zum Heizen einer Dichteinheit einer Rotorlagereinheit einer Windenergieanlage. Die Dichteinheit und/oder die Rotorlagereinheit hat/haben insbesondere die Merkmale und/oder Vorteile, wie diese zuvor bezüglich des ersten und weiteren Aspekts der Dichteinheit und/oder der Rotorlagereinheit und ihrer Ausführungsformen beschrieben worden sind.

Das Verfahren zum Bereitstellen eines Schaltsignals zum Heizen einer Dichteinheit umfasst folgende Schritte:
- ein Erfassen eines einer IST-Temperatur entsprechenden Signals, welches von einer Temperaturmesseinheit bereitgestellt wird;
- ein Bestimmen einer Minimalgrenzbetriebstemperatur;
- ein Vergleichen des der IST-Temperatur entsprechenden Signals mit der Minimalgrenzbetriebstemperatur,
- ein Bereitstellen eines Schaltsignals, welches
   ∘ ein Schalten einer Schalteinheit von einem Ruhezustand in einen Heizzustand auslöst, wenn die IST-Temperatur unter eine Minimalgrenzbetriebstemperatur fällt, so dass eine Spannungsquelle mit einem Metallelement eines Dichtrings einen Stromkreis schließt, so dass die Spannungsquelle dem Metallelement einen elektrischen Strom erzeugt, und/oder
   ∘ ein Schalten der Schalteinheit von dem Heizzustand in den Ruhezustand auslöst, wenn
      ▪ die IST-Temperatur die Minimalgrenzbetriebstemperatur überschreitet,
      ▪ die IST-Temperatur eine Maximalgrenzbetriebstemperatur der Dichteinheit überschreitet, und/oder
      ▪ die IST-Temperatur in einem Bereich der Zielbetriebstemperatur der Dichteinheit liegt,
so dass der Stromkreis der Spannungsquelle und des Metallelements unterbricht, so dass die Spannungsquelle dem Metallelement keinen elektrischen Strom erzeugt.

Zu den Vorteilen, Ausführungsvarianten und Ausführungsdetails dieses Aspekts der Erfindung und ihrer Fortbildungen wird auch auf die vorstehende und nachfolgende Beschreibung zu den entsprechenden Merkmalen der jeweiligen anderen Aspekte sowie der Ausführungsvarianten und Ausführungsdetails dieser weiteren Aspekte der Erfindung verwiesen.

Gemäß einem weiteren Aspekt der Erfindung wird die Aufgabe durch ein Verfahren zum Heizen einer Dichteinheit nach Anspruch 12 gelöst. Das Verfahren ist insbesondere ein Verfahren zum Heizen einer Dichteinheit einer Rotorlagereinheit einer Windenergieanlage. Die Dichteinheit und/oder die Rotorlagereinheit hat/haben insbesondere die Merkmale und/oder Vorteile, wie diese zuvor bezüglich des ersten und weiteren Aspekts der Dichteinheit und/oder der Rotorlagereinheit und ihrer Ausführungsformen beschrieben worden ist.

Das Verfahren zum Heizen einer Dichteinheit umfasst folgende Schritte:
- die Schritte des zuvor beschriebenen Verfahrens zum Bereitstellen eines Schaltsignals zum Heizen einer Dichteinheit,
- ein Schließen des Stromkreises, wenn das Schaltsignal das Schalten von dem Ruhezustand in den Heizzustand auslöst, und
- ein Unterbrechen des Stromkreises, wenn das Schaltsignal das Schalten von dem Heizzustand in den Ruhezustand auslöst.

Zu den Vorteilen, Ausführungsvarianten und Ausführungsdetails dieses Aspekts der Erfindung und ihrer Fortbildungen wird auch auf die vorstehende und nachfolgende Beschreibung zu den entsprechenden Merkmalen der jeweiligen anderen Aspekte sowie der Ausführungsvarianten und Ausführungsdetails dieser weiteren Aspekte der Erfindung verwiesen.

Gemäß einem weiteren Aspekt der Erfindung wird die Aufgabe durch eine Steuerungseinheit zum Heizen einer Dichteinheit nach Anspruch 13 gelöst. Die Steuerungseinheit ist insbesondere eine Steuerungseinheit zum Heizen einer Dichteinheit für eine Rotorlagereinheit einer Windenergieanlage. Die Dichteinheit und/oder die Rotorlagereinheit hat/haben insbesondere die Merkmale und/oder Vorteile, wie diese zuvor bezüglich des ersten und weiteren Aspekts der Dichteinheit und/oder der Rotorlagereinheit und ihrer Ausführungsformen beschrieben worden ist.

Die Steuerungseinheit ist ausgebildet, ein einer erfassten IST-Temperatur einer Temperaturmesseinheit entsprechendes Signal zu empfangen und dieses Signal mit einer bestimmten Minimalgrenzbetriebstemperatur zu vergleichen, wobei die Steuerungseinheit ausgebildet ist, einer Schalteinheit ein entsprechendes Schaltsignal bereitzustellen, welches ein Schalten von dem Ruhezustand in den Heizzustand auslöst, wenn die IST-Temperatur unter eine Minimalgrenzbetriebstemperatur fällt, und/oder ein Schalten von dem Heizzustand in den Ruhezustand auslöst, wenn die IST-Temperatur die Minimalgrenzbetriebstemperatur überschreitet, und/oder die IST-Temperatur eine Maximalgrenzbetriebstemperatur der Dichteinheit überschreitet, und/oder die IST-Temperatur in einem Bereich der Zielbetriebstemperatur der Dichteinheit liegt.

Zu den Vorteilen, Ausführungsvarianten und Ausführungsdetails dieses Aspekts der Erfindung und ihrer Fortbildungen wird auch auf die vorstehende und nachfolgende Beschreibung zu den entsprechenden Merkmalen der jeweiligen anderen Aspekte sowie der Ausführungsvarianten und Ausführungsdetails dieser weiteren Aspekte der Erfindung verwiesen.

Gemäß einer bevorzugten Fortbildung der Steuerungseinheit ist vorgesehen, dass die Steuerungseinheit ausgebildet ist, eines der zuvor beschriebenen Verfahren auszuführen.

Gemäß einem weiteren Aspekt der Erfindung wird die Aufgabe durch eine Verwendung eines elektrisch leitenden Metallelements nach den Ansprüchen 15 und 16 gelöst.

Gemäß dem einen weiteren Aspekt ist eine Verwendung eines elektrisch leitenden Metallelements eines Radialwellendichtrings als Heizelement für den Radialwellendichtring vorgesehen, wobei das Metallelement vorzugsweise ein Vorspannelement und/oder eine Zugfeder des Radialwellendichtrings ist.

Gemäß dem einen weiteren Aspekt ist eine Verwendung eines elektrisch leitenden Metallelements eines Axialwellendichtrings als Heizelement für den Axialwellendichtrings vorgesehen, wobei das Metallelement vorzugsweise ein Vorspannelement und/oder eine Zugfeder des Axialwellendichtrings ist.

Zu den Vorteilen, Ausführungsvarianten und Ausführungsdetails dieses Aspekts der Erfindung und ihrer Fortbildungen wird auch auf die vorstehende und nachfolgende Beschreibung zu den entsprechenden Merkmalen der jeweiligen anderen Aspekte sowie der Ausführungsvarianten und Ausführungsdetails dieser weiteren Aspekte der Erfindung verwiesen.

Gemäß einem weiteren Aspekt der Erfindung wird die Aufgabe durch eine Verwendung einer Dichteinheit nach Anspruch 17 gelöst.

Gemäß diesem weiteren Aspekt ist eine Verwendung einer zuvor beschriebenen Dichteinheit für eine Rotorlagereinheit einer Windenergieanlage vorgesehen, insbesondere für eine zuvor beschriebene Rotorlagereinheit und/oder zuvor beschrieben Windenergieanlage.

Zu den Vorteilen, Ausführungsvarianten und Ausführungsdetails dieses Aspekts der Erfindung und ihrer Fortbildungen wird auch auf die vorstehende Beschreibung zu den entsprechenden Merkmalen der jeweiligen anderen Aspekte sowie der Ausführungsvarianten und Ausführungsdetails dieser weiteren Aspekte der Erfindung verwiesen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: eine schematische Darstellung einer Windenergieanlage;
- Fig. 2: eine schematische Darstellung einer Dichteinheit gemäß einer bevorzugten Ausführungsform in einer Schnittansicht;
- Fig. 3: eine schematische Darstellung einer Rotorlagereinheit gemäß einer bevorzugten Ausführungsform in einer Schnittansicht;
- Fig.4: ein schematisches Blockdiagramm eines Verfahrens zum Bereitstellen eines Schaltsignals zum Heizen einer Dichteinheit gemäß einer Ausführungsform; und
- Fig. 5: ein schematisches Blockdiagramm eines Verfahrens zum Heizen einer Dichteinheit gemäß einer Ausführungsform.

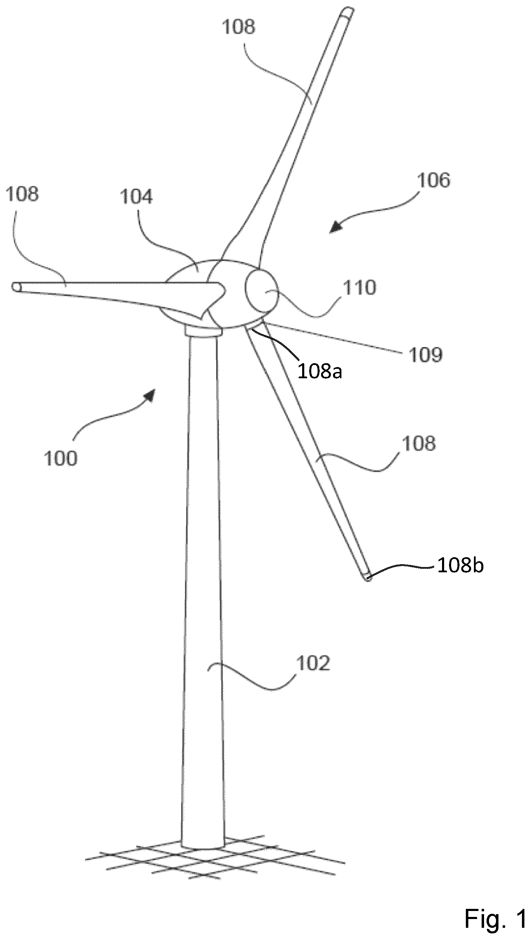

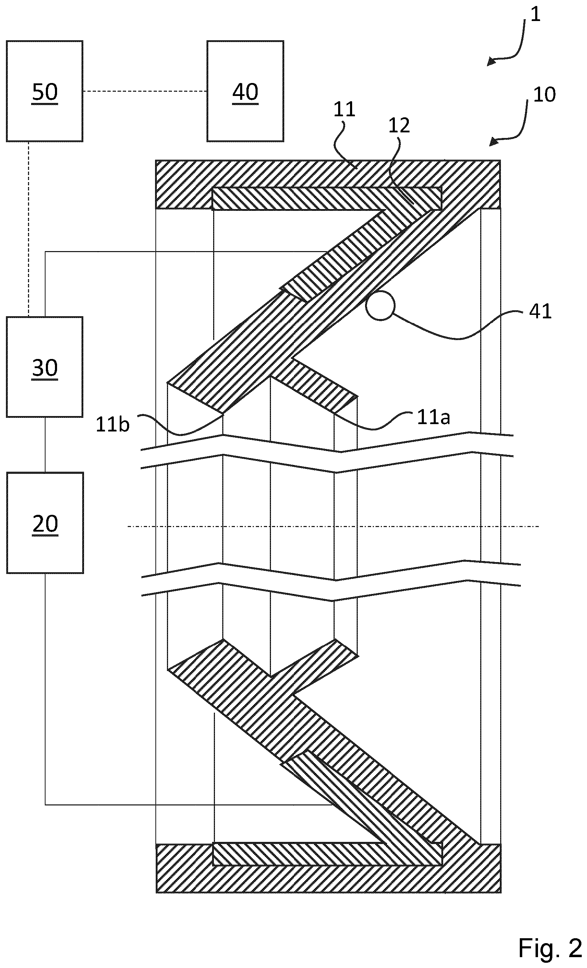

Figur 1 zeigt eine schematische, dreidimensionale Ansicht einer beispielhaften Ausführungsform einer Windenergieanlage. Figur 1 zeigt insbesondere eine Windenergieanlage 100 mit einem Turm 102 und einer Gondel 104. An der Gondel 104 ist ein aerodynamischer Rotor 106 mit drei Rotorblättern 108 und einem Spinner 110 angeordnet. Der aerodynamische Rotor 106 wird im Betrieb durch den Wind in eine Drehbewegung versetzt und treibt dadurch einen Generator, insbesondere einen Rotor des Generators, an. Der Generator der in Figur 1 beispielhaft gezeigten Windenergieanlage kann eine Dichteinheit gemäß der in Figur 2 gezeigten Ausführungsform und/oder eine Rotorlagereinheit gemäß der in Figur gezeigten Ausführungsform umfassen.

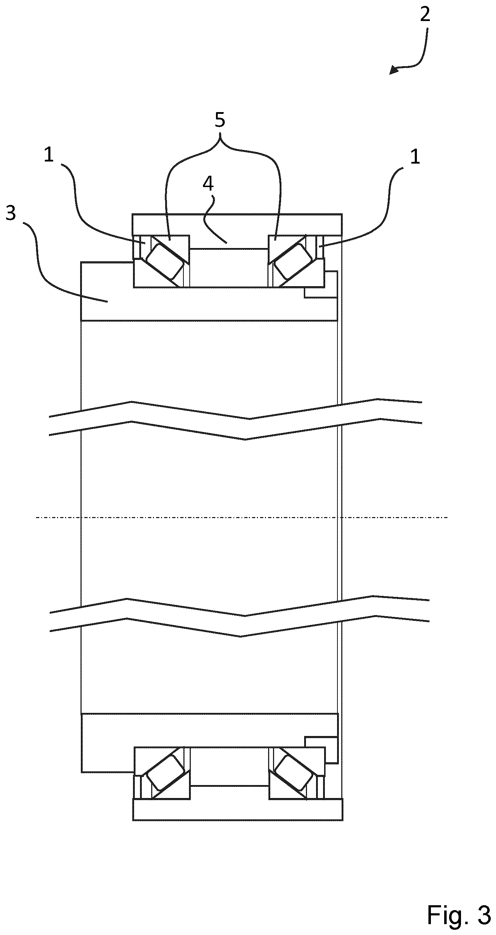

Figur 2 zeigt eine schematische Darstellung einer Dichteinheit 1 gemäß einer bevorzugten Ausführungsform in einer Schnittansicht. Diese Dichteinheit kann beispielsweise in einer Rotorlagereinheit 2 eingesetzt werden, wie diese gemäß einer bevorzugten Ausführungsform in einer Schnittansicht in Figur 3 schematisch dargestellt ist. Bei der Rotorlagereinheit 2 dichten zwei Dichteinheiten 1 eine Lageranordnung von zwei Wälzlagern in O-Anordnung ab, welche einen Rotorlagerinnenring 3 gegenüber einem Rotorlageraußenring 4 drehbar lagern. Die Dichteinheit verhindert hierbei, dass in die Lageranordnung 5 zwischen dem Rotorlagerinnenring 3 und dem Rotorlageraußenring 4 eingebrachte Schmierstoffe in die Umgebung austreten. Figur 3 zeigt somit die Verwendung von zwei Dichteinheiten 1 in einer Rotorlagereinheit 2 einer Windenergieanlage 100.

Sofern die Dichteinheit bzw. die Rotorlagereinheit in einem zulässigen Temperaturbereich betrieben wird, erfüllen vorbekannte Dichtungen, etwa Radialwellendichtringe und/oder Axialwellendichtringe, diese Dichtfunktion. Sie verlieren ihre Dichtwirkung allerdings, wenn die Temperatur der Dichteinheit unter eine Minimalgrenzbetriebstemperatur sinkt. Die Dichtungen verlieren dann ihre Elastizität und damit ihre Dichtwirkung. Dies verhindert die erfindungsgemäße Dichteinheit. In der in Figur 2 dargestellten Ausführungsform der Dichteinheit 1 wird dies dadurch erreicht, dass ein Metalleinsatz des dort gezeigten Radialwellendichtrings genutzt wird, um die Dichteinheit 1 durch Elektrowärme zu temperieren, so dass sie nicht die Elastizität und damit die Dichtwirkung verliert.

Die in Figur 2 dargestellte Dichteinheit weist einen Dichtring 10, der wie gesagt als Radialwellendichtring ausgebildet ist. Der Dichtring 10 umfasst einen Dichtkörper 11, der aus Kunststoff oder Kautschuk besteht, und ein elektrisch leitendes Metallelement 12 in Form eines Metalleinsatzes, welches dem Radialwellendichtring die für den Einsatz erforderliche Vorspannung und damit Dichtwirkung verleiht. Hierzu umschließt der Dichtkörper 11 den Metalleinsatz 12 zu einem wesentlichen Teil, so dass der Metalleinsatz 12 an dem Dichtkörper 11 anliegt.

Es ist ferner eine Spannungsquelle 20 vorgesehen, welche mit dem Metalleinsatz 12 gekoppelt ist bzw. koppelbar ist. Durch eine Schalteinheit 30 kann der von der Spannungsquelle 20 und dem Metalleinsatz 12 gebildete Stromkreis geschlossen werden (geschlossener Stromkreis) oder unterbrochen werden (geöffneter oder unterbrochener Stromkreis).

Figur 2 zeigt somit die Verwendung eines elektrisch leitenden Metallelements 12 eines Radialwellendichtrings 10 als Heizelement für den Radialwellendichtring, wobei das Metallelement 12 ein Vorspannelement des Radialwellendichtrings 10 ist. Würde der in Figur 2 gezeigte Radialwellendichtring eine in einer Federnut angeordnete Zugfeder aufweisen, könnte auch die Zugfeder als Heizelement verwendet werden.

Die Schalteinheit ist somit ausgebildet, die Spannungsquelle 20 mit dem Metallelement 12 in einem Heizzustand der Dichteinheit 1 zu einem Stromkreis zu schließen, so dass die Spannungsquelle 20 dem Metallelement 12 einen elektrischen Strom erzeugt. Ferner ist die Schalteinheit ist ausgebildet, den Stromkreis der Spannungsquelle 20 und des Metallelements 12 in einem von dem Heizzustand verschiedenen Ruhezustand der Dichteinheit 1 zu unterbrechen, so dass die Spannungsquelle 20 dem Metallelement 12 keinen elektrischen Strom erzeugt.

Hierdurch kann der Dichtkörper also in solcher Weise temperiert werden, dass er auch bei kalten Temperaturen nicht die Elastizität und somit die Dichtungswirkung verliert. Hierbei macht man sich zunutze, dass das stromdurchflossene Metallelement 12 in Abhängigkeit des Stroms / bzw. der Spannung U, dem ohmschen Widerstand R und der Zeit t, in der die elektrische Spannung an dem Metallelement 12 anliegt bzw. der elektrische Strom durch das Metallelement 12 fließt, Wärme Q, auch Elektrowärme genannt, erzeugt: $Q = \frac{{U}^{2}}{R} ∗ t = {I}^{2} ∗ R ∗ t$

Dies ermöglicht, die Dichteinheit 1 auf eine gewünschte Temperatur zu temperieren, so dass sie nicht die Dichtwirkung verliert. Nach der Erkenntnis der Erfinder tritt dies in der Regel bei kalten Temperaturen auf, wobei vorbekannte Dichtungen üblicherweise ab einer Temperatur von -20°C ihre für die Dichtwirkung erforderliche Elastizität verlieren.

In der vorliegenden Ausführungsform ist ferner vorgesehen, dass die Dichteinheit 1 eine Temperaturmesseinheit 40 und eine Steuerungseinheit aufweist. Die Temperaturmesseinheit 40 ist hierbei im Bereich der Dichteinheit 1 angeordnet, um eine IST-Temperatur zu erfassen, welche etwa der Temperatur des Dichtkörpers 11 entspricht. Insbesondere kann ein Temperaturfühler 41, zum Beispiel vom Typ PT100, an der Dichteinheit angeordnet sein. Selbstverständlich kann die Temperaturmesseinheit 40 auch derart an der Dichteinheit 1 angeordnet sein, dass direkt die IST-Temperatur des Dichtkörpers 11, insbesondere der Staublippe 11a und der Dichtlippe 11b, erfasst werden kann. Ob dies möglich ist, hängt üblicherweise vom zur Verfügung stehenden Bauraum ab. Hinzu kommt, dass eine Anordnung der Temperaturmesseinheit 40 direkt an dem Dichtkörper nicht zwingend erforderlich ist, wenn die erfasste IST-Temperatur ausreichend genau auf die Temperatur des Dichtkörpers Rückschlüsse zulässt und somit eine ausreichend genaue Temperierung des Dichtkörpers für eine zuverlässige Dichtwirkung sicherstellt.

In diesem Ausführungsbeispiel ist die Schalteinheit 30 entsprechend ausgebildet, die Dichteinheit 1 von dem Ruhezustand in den Heizzustand zu schalten, wenn die IST-Temperatur unter eine Minimalgrenzbetriebstemperatur der Dichteinheit fällt. Ferner ist die Schalteinheit 30 ausgebildet, die Dichteinheit 1 von dem Heizzustand in den Ruhezustand zu schalten, wenn die IST-Temperatur die Minimalgrenzbetriebstemperatur überschreitet, und/oder die IST-Temperatur eine Maximalgrenzbetriebstemperatur der Dichteinheit überschreitet, und/oder die IST-Temperatur in einem Bereich der Zielbetriebstemperatur der Dichteinheit liegt.

Die Minimal- und Maximalgrenzbetriebstemperatur hängen hierbei wesentlich von der Wahl des Werkstoffes ab. Üblicherweise liegt aber die Minimalgrenzbetriebstemperatur bei den vorbekannten Dichtungen, wie zuvor bereits erläutert, bei einer Temperatur von -20°C. Dies bedeutet, dass die vorbekannten Dichtungen, deren Dichtkörper eine Temperatur unter -20°C hat, ihre Elastizität und damit Dichtungswirkung verlieren. Insofern wird die Dichteinheit in einen Heizzustand geschaltet, so dass die Schalteinheit den Stromkreis schließt und in Abhängigkeit der Spannungsquelle eine Spannung an dem Metalleinsatz anliegt bzw. ein Strom durch den Metalleinsatz fließt, wenn die Temperatur des Dichtkörpers in diesem Beispiel unter -20°C fällt. Sobald die Temperatur des Dichtkörpers 11 in diesem Beispiel die -20°C überschreitet, wird die Dichteinheit in den Ruhezustand geschaltet, so dass die Schalteinheit den Stromkreis unterbricht, so dass kein Strom durch den Metalleinsatz 12 fließt und somit auch keine Elektrowärme zum weiteren Erwärmen des Dichtkörpers erzeugt wird.

Dieser Wechsel zwischen dem Heizzustand und dem Ruhezustand der Dichteinheit kann durch die Steuerungseinheit 50 gesteuert oder geregelt werden. Hierzu ist die Steuerungseinheit 50 mit der Temperaturmesseinheit 40 und der Schalteinheit 30 signaltechnisch gekoppelt. Die Steuerungseinheit 50 stellt der Schalteinheit 30 hierbei ein entsprechendes Schaltsignal bereit, welches ein Schalten von dem Ruhezustand in den Heizzustand auslöst, wenn die IST-Temperatur unter eine Minimalgrenzbetriebstemperatur fällt, und/oder ein Schalten von dem Heizzustand in den Ruhezustand auslöst, wenn die IST-Temperatur die Minimalgrenzbetriebstemperatur überschreitet, und/oder die IST-Temperatur eine Maximalgrenzbetriebstemperatur der Dichteinheit überschreitet, und/oder die IST-Temperatur in einem Bereich der Zielbetriebstemperatur der Dichteinheit liegt. Entsprechend ist die Steuerungseinheit 50 ausgebildet, das im Folgenden beschriebene Verfahren 1000 zum Bereitstellen eines Schaltsignals zum Heizen einer Dichteinheit 1 sowie das im Folgenden beschriebene Verfahren 2000 zum Heizen einer Dichteinheit 1 auszuführen.

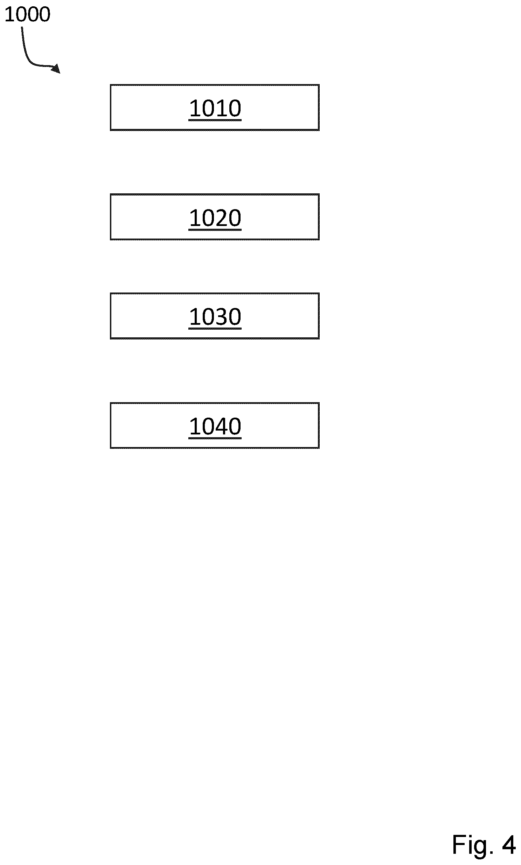

Figur 4 zeigt ein schematisches Blockdiagramm eines Verfahrens 1000 zum Bereitstellen eines Schaltsignals zum Heizen der beispielsweise in Figur 2 gezeigten Dichteinheit 1 für eine beispielsweise in Figur 3 gezeigte Rotorlagereinheit einer Windenergieanlage. Das Verfahren 1000 umfasst folgende Schritte:
- ein Erfassen 1010 eines einer IST-Temperatur entsprechenden Signals, welches von einer Temperaturmesseinheit 40 bereitgestellt wird;
- ein Bestimmen 1020 einer Minimalgrenzbetriebstemperatur;
- ein Vergleichen 1030 des der IST-Temperatur entsprechenden Signals mit der Minimalgrenzbetriebstemperatur,
- ein Bereitstellen 1040 eines Schaltsignals, welches
   ∘ ein Schalten einer Schalteinheit von einem Ruhezustand in einen Heizzustand auslöst, wenn die IST-Temperatur unter eine Minimalgrenzbetriebstemperatur fällt, so dass eine Spannungsquelle 20 mit einem Metallelement 12 eines Dichtrings 10 einen Stromkreis schließt, so dass die Spannungsquelle 20 dem Metallelement 12 einen elektrischen Strom erzeugt, und/oder
   ∘ ein Schalten der Schalteinheit von dem Heizzustand in den Ruhezustand auslöst, wenn
      ▪ die IST-Temperatur die Minimalgrenzbetriebstemperatur überschreitet,
      ▪ die IST-Temperatur eine Maximalgrenzbetriebstemperatur der Dichteinheit überschreitet, und/oder
      ▪ die IST-Temperatur in einem Bereich der Zielbetriebstemperatur der Dichteinheit liegt,
so dass der Stromkreis der Spannungsquelle 20 und des Metallelements 12 unterbricht, so dass die Spannungsquelle 20 dem Metallelement 12 keinen elektrischen Strom erzeugt.

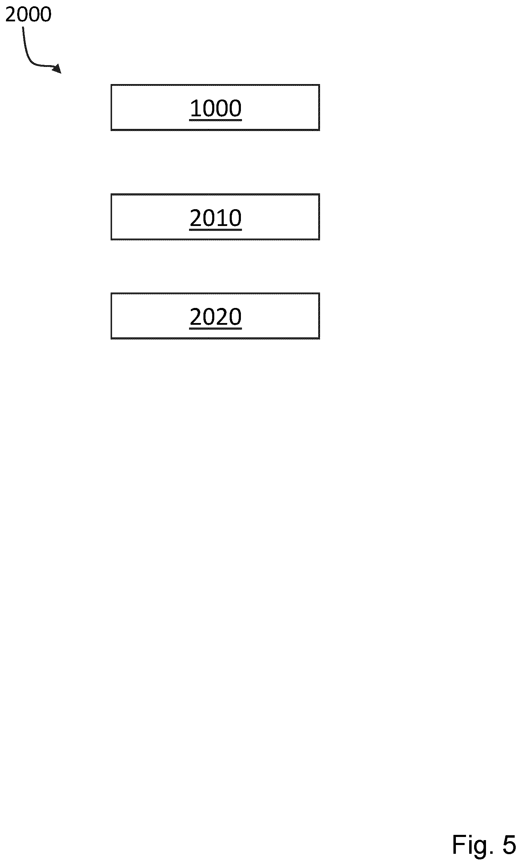

Fig. 5 zeigt ein schematisches Blockdiagramm eines Verfahrens 2000 zum Heizen der beispielsweise in Figur 2 gezeigten Dichteinheit 1 für eine beispielsweise in Figur 3 gezeigte Rotorlagereinheit einer Windenergieanlage. Das Verfahren 2000 umfasst folgende Schritte:
- die Schritte des Verfahrens 1000 zum Bereitstellen eines Schaltsignals zum Heizen einer Dichteinheit 1 nach dem vorhergehenden Anspruch,
- ein Schließen 2010 des Stromkreises, wenn das Schaltsignal das Schalten von dem Ruhezustand in den Heizzustand auslöst, und
- ein Unterbrechen 2020 des Stromkreises, wenn das Schaltsignal das Schalten von dem Heizzustand in den Ruhezustand auslöst.

### BEZUGSZEICHENLISTE

- 1: Dichteinheit
- 2: Rotorlagereinheit
- 3: Rotorlagerinnenring
- 4: Rotorlageraußenring
- 5: Lageranordnung
- 10: Dichtring
- 11: Dichtkörper
- 11a: Staublippe
- 11b: Dichtlippe
- 12: elektrisch leitendes Metallelement
- 20: Spannungsquelle
- 30: Schalteinheit
- 40: Temperaturmesseinheit
- 41: Temperaturfühler
- 50: Steuerungseinheit
- 100: Windenergieanlage
- 1000: Verfahren zum Bereitstellen eines Schaltsignals zum Heizen einer Dichteinheit
- 2000: Verfahren zum Heizen einer Dichteinheit

## Patentansprüche

1. Dichteinheit (1), insbesondere Dichteinheit (1) für eine Rotorlagereinheit (2) einer Windenergieanlage (100), umfassend
- einen Dichtring (10), aufweisend
∘ einen Dichtkörper (11) bestehend aus Kunststoff oder Kautschuk und
∘ ein elektrisch leitendes Metallelement (12), welches an dem Dichtkörper (11) mindestens abschnittsweise anliegt,
- eine mit dem Metallelement (12) koppelbare oder gekoppelte Spannungsquelle (20), zum Erzeugen eines elektrischen Stroms in dem Metallelement (12),
- eine Schalteinheit (30), welche ausgebildet ist,
∘ die Spannungsquelle (20) mit dem Metallelement (12) in einem Heizzustand der Dichteinheit (1) zu einem Stromkreis zu schließen, so dass die Spannungsquelle (20) dem Metallelement (12) einen elektrischen Strom erzeugt, und
∘ den Stromkreis der Spannungsquelle (20) und des Metallelements (12) in einem von dem Heizzustand verschiedenen Ruhezustand der Dichteinheit (1) zu unterbrechen, so dass die Spannungsquelle (20) dem Metallelement (12) keinen elektrischen Strom erzeugt.

2. Dichteinheit (1) nach dem vorhergehenden Anspruch,
- aufweisend eine Temperaturmesseinheit (40), welche im Bereich des Dichtrings (10), vorzugsweise an dem Dichtkörper (11), angeordnet ist und eine IST-Temperatur erfasst, wobei
- die Schalteinheit (30) ausgebildet ist,
∘ die Dichteinheit (1) von dem Ruhezustand in den Heizzustand zu schalten, wenn die IST-Temperatur unter eine Minimalgrenzbetriebstemperatur der Dichteinheit fällt, und
∘ die Dichteinheit (1) von dem Heizzustand in den Ruhezustand zu schalten, wenn
▪ die IST-Temperatur die Minimalgrenzbetriebstemperatur überschreitet, und/oder
▪ die IST-Temperatur eine Maximalgrenzbetriebstemperatur der Dichteinheit überschreitet, und/oder
▪ die IST-Temperatur in einem Bereich der Zielbetriebstemperatur der Dichteinheit liegt.

3. Dichteinheit (1) nach einem der vorhergehenden Ansprüche, aufweisend eine Steuerungseinheit (50), welche mit der Schalteinheit (30) und/oder der Temperaturmesseinheit (40) signaltechnisch gekoppelt ist, wobei die Steuerungseinheit (50) ausgebildet ist, der Schalteinheit (30) ein entsprechendes Schaltsignal bereitzustellen, welches
- ein Schalten von dem Ruhezustand in den Heizzustand auslöst, wenn die IST-Temperatur unter eine Minimalgrenzbetriebstemperatur fällt, und/oder
- ein Schalten von dem Heizzustand in den Ruhezustand auslöst, wenn
∘ die IST-Temperatur die Minimalgrenzbetriebstemperatur überschreitet, und/oder
∘ die IST-Temperatur eine Maximalgrenzbetriebstemperatur der Dichteinheit (1) überschreitet, und/oder
o die IST-Temperatur in einem Bereich der Zielbetriebstemperatur der Dichteinheit (1) liegt.

4. Dichteinheit (1) nach einem der vorhergehenden Ansprüche, wobei das elektrisch leitende Metallelement (12)
- ein Vorspannelement zum Vorspannen des Dichtkörpers (11) ist, und/oder
- eine Zugfeder zum Spannen des Dichtkörpers (11) ist, und/oder
- ein Draht ist, und/oder
- ein ringförmiges Winkelelement ist.

5. Dichteinheit (1) nach einem der vorhergehenden Ansprüche, wobei der Dichtkörper (11) das Metallelement (12) mindestens teilweise umschließt und/oder das Metallelement (12) vom Dichtkörper (11) mindestens teilweise umgossen ist.

6. Dichteinheit (1) nach einem der vorhergehenden Ansprüche, wobei der Dichtring (10) ein Radialwellendichtring oder ein Axialwellendichtring ist.

7. Rotorlagereinheit (2) für eine Windenergieanlage (100), umfassend eine oder mehrere Dichteinheit/en (1) nach einem der vorhergehenden Ansprüche.

8. Rotorlagereinheit (2) nach dem vorhergehenden Anspruch, wobei die eine oder mehreren Dichteinheit/en (1) zwei oder mehrere Axialwellendichtringe und/oder zwei oder mehrere Radialwellendichtringe aufweist bzw. aufweisen, die jeweils mit der Spannungsquelle (20) der jeweiligen Dichteinheit (1) koppelbar sind oder gekoppelt sind.

9. Rotorlagereinheit (2) nach einem der vorhergehenden Ansprüche 7 oder 8, aufweisend eine Temperaturmesseinheit (40), welche an oder innerhalb der Rotorlagereinheit (2) angeordnet ist, wobei die Temperaturmesseinheit (40) insbesondere im Bereich des Dichtrings (10), vorzugsweise an dem Dichtkörper (11), angeordnet ist.

10. Windenergieanlage (100) umfassend eine Dichteinheit (1) nach einem der vorhergehenden Ansprüche 1-6 und/oder eine Rotorlagereinheit (2) nach einem der vorhergehenden Ansprüche 7-9.

11. Verfahren (1000) zum Bereitstellen eines Schaltsignals zum Heizen einer Dichteinheit (1), insbesondere einer Dichteinheit (1) für eine Rotorlagereinheit (2) einer Windenergieanlage (100), umfassend die Schritte:
- ein Erfassen (1010) eines einer IST-Temperatur entsprechenden Signals, welches von einer Temperaturmesseinheit (40) bereitgestellt wird;
- ein Bestimmen (1020) einer Minimalgrenzbetriebstemperatur;
- ein Vergleichen (1030) des der IST-Temperatur entsprechenden Signals mit der Minimalgrenzbetriebstemperatur,
- ein Bereitstellen (1040) eines Schaltsignals, welches
∘ ein Schalten einer Schalteinheit von einem Ruhezustand in einen Heizzustand auslöst, wenn die IST-Temperatur unter eine Minimalgrenzbetriebstemperatur fällt, so dass eine Spannungsquelle (20) mit einem Metallelement (12) eines Dichtrings (10) einen Stromkreis schließt, so dass die Spannungsquelle (20) dem Metallelement (12) einen elektrischen Strom erzeugt, und/oder
∘ ein Schalten der Schalteinheit von dem Heizzustand in den Ruhezustand auslöst, wenn
▪ die IST-Temperatur die Minimalgrenzbetriebstemperatur überschreitet,
▪ die IST-Temperatur eine Maximalgrenzbetriebstemperatur der Dichteinheit überschreitet, und/oder
▪ die IST-Temperatur in einem Bereich der Zielbetriebstemperatur der Dichteinheit liegt,
so dass der Stromkreis der Spannungsquelle (20) und des Metallelements (12) unterbricht, so dass die Spannungsquelle (20) dem Metallelement (12) keinen elektrischen Strom erzeugt.

12. Verfahren (2000) zum Heizen einer Dichteinheit (1), insbesondere einer Dichteinheit (1) für eine Rotorlagereinheit (2) einer Windenergieanlage (100), umfassend die Schritte:
- die Schritte des Verfahrens (1000) zum Bereitstellen eines Schaltsignals zum Heizen einer Dichteinheit (1) nach dem vorhergehenden Anspruch,
- ein Schließen (2010) des Stromkreises, wenn das Schaltsignal das Schalten von dem Ruhezustand in den Heizzustand auslöst, und
- ein Unterbrechen (2020) des Stromkreises, wenn das Schaltsignal das Schalten von dem Heizzustand in den Ruhezustand auslöst.

13. Steuerungseinheit (50) zum Heizen einer Dichteinheit (1), insbesondere einer Dichteinheit (1) für eine Rotorlagereinheit (2) einer Windenergieanlage (100), die ausgebildet ist, ein einer erfassten IST-Temperatur einer Temperaturmesseinheit (40) entsprechendes Signal zu empfangen und dieses Signal mit einer bestimmten Minimalgrenzbetriebstemperatur zu vergleichen, wobei die Steuerungseinheit (50) ausgebildet ist, einer Schalteinheit (30) ein entsprechendes Schaltsignal bereitzustellen, welches
- ein Schalten von dem Ruhezustand in den Heizzustand auslöst, wenn die IST-Temperatur unter eine Minimalgrenzbetriebstemperatur fällt, und/oder
- ein Schalten von dem Heizzustand in den Ruhezustand auslöst, wenn
o die IST-Temperatur die Minimalgrenzbetriebstemperatur überschreitet, und/oder
∘ die IST-Temperatur eine Maximalgrenzbetriebstemperatur der Dichteinheit (1) überschreitet, und/oder
∘ die IST-Temperatur in einem Bereich der Zielbetriebstemperatur der Dichteinheit (1) liegt.

14. Steuerungseinheit (50) nach dem vorhergehenden Anspruch, wobei die Steuerungseinheit (50) ausgebildet ist, das Verfahren nach einem der vorhergehenden Ansprüche 12 oder 13 auszuführen.

15. Verwendung eines elektrisch leitenden Metallelements (12) eines Radialwellendichtrings (10) als Heizelement für den Radialwellendichtring, wobei das Metallelement (12) vorzugsweise ein Vorspannelement und/oder eine Zugfeder des Radialwellendichtrings (10) ist.

16. Verwendung eines elektrisch leitenden Metallelements (12) eines Axialwellendichtrings (10) als Heizelement für den Axialwellendichtring, wobei das Metallelement (12) vorzugsweise ein Vorspannelement und/oder eine Zugfeder des Axialwellendichtrings (10) ist.

17. Verwendung einer Dichteinheit (1) nach einem der vorhergehenden Ansprüche 1-6 für eine Rotorlagereinheit (2) einer Windenergieanlage (100).
